# EUROPÄISCHE PATENTSCHRIFT

(11) **EP 2 561 484 B1**
(45) Veröffentlichungstag und Bekanntmachung des Hinweises auf die Patenterteilung: **19.12.2018**
(21) Anmeldenummer: 11716486.3
(22) Anmeldetag: 20.04.2011
(51) Int. Cl.: G07B 15/02, G06Q 20/04, H04W 12/04

(54) **VERFAHREN ZUR HANDHABUNG VON ELEKTRONISCHEN TICKETS**
METHOD FOR HANDLING ELECTRONIC TICKETS
PROCÉDÉ DE MANIPULATION DE BILLETS ÉLECTRONIQUES

(30) Priorität: 22.04.2010 DE 102010017861
(43) Veröffentlichungstag der Anmeldung: 27.02.2013
(73) Patentinhaber: Giesecke+Devrient Mobile Security GmbH, 81677 München (DE)
(72) Erfinder: SCHUSTER, Helmut, 87660 Irsee (DE)
(86) Internationale Anmeldenummer: PCT/EP2011/002026
(87) Internationale Veröffentlichungsnummer: WO 2011/131359

(56) Entgegenhaltungen:
- EP-A1- 0 463 557
- EP-A1- 1 638 052
- EP-A2- 0 752 688
- WO-A2-02/101663
- WO-A2-03/081549
- WO-A2-2008/009654
- DE-A1- 4 314 003
- GB-A- 2 460 240
- US-A1- 2004 030 658

## Beschreibung

Die Erfindung betrifft ein Verfahren zur Handhabung von elektronischen Tickets, insbesondere von elektronischen Fahrscheinen, wobei das elektronische Ticket auf einem tragbaren Datenträger eines mobilen Benutzergeräts gespeichert wird.

Tickets, wie z.B. Fahrscheine, die zur Benutzung eines Personenverkehrsmittels berechtigen, können häufig an dafür vorgesehenen Automaten oder Terminals gekauft werden. Nach der Bezahlung mittels Bargeld oder in bargeldloser Form muss der meist in Papierform vorliegende Fahrschein üblicherweise entwertet werden. Die Bereitstellung der Automaten oder Terminals ist in der Anschaffung und in der Wartung mit einem hohen monetären Aufwand verbunden. Es wird deshalb nur die unbedingt nötige Anzahl bereitgestellt. Dies hat zur Folge, dass sich in Spitzenzeiten Schlangen vor den Automaten oder Terminals bilden können. Da eine Fahrt mit öffentlichen Verkehrsmitteln jedoch nur mit gültigem Fahrschein zulässig ist, kommt es gelegentlich vor, dass die Nutzer ihr Verkehrsmittel verpassen. Teilweise ist der Kauf eines Fahrscheins zwar noch in dem Verkehrsmittel möglich. Dies ist jedoch häufig unkomfortabel. Wird der Fahrschein durch den Fahrer des Verkehrsmittels verkauft, so kann dieser z.B. nicht weiterfahren, solange der Kauf nicht vollständig abgeschlossen ist. Der herkömmliche Fahrscheinverkauf ist daher mit einigen Unannehmlichkeiten verbunden.

Es wurden deshalb alternative Systeme entwickelt, die den Kauf eines Fahrscheins oder anderer Tickets auf bequemere Weise erlauben. So sind aus dem Stand der Technik z.B. serverbasierte Lösungen für einen Fahrscheinverkauf bekannt. Ein Server übernimmt hier die Funktion einer vertrauenswürdigen Instanz, die gekaufte elektronische Fahrscheine speichert und sicher dokumentieren kann, wann ein jeweiliger Fahrschein gekauft wurde. Zur Kontrolle eines Fahrscheins teilt der Fahrgast dem Kontrolleur einen eindeutigen Kennzeichner mit, unter dem der zugehörige Fahrschein auf dem Server auffindbar ist. Das unberechtigte Erstellen von Fahrscheinen sowie eine nachträgliche Manipulation daran ist durch die Datenspeicherung auf dem Server ausgeschlossen. Um unberechtigte Kopien eines Fahrscheins zu vermeiden, werden häufig zusätzlich personenbezogene Daten gespeichert, wodurch prinzipiell durch ein Verkehrsunternehmen ein detailliertes Bewegungsprofil der Fahrgäste anfertigbar ist. Ein weiterer Nachteil besteht darin, dass der Zugriff auf einen Server - sowohl beim Kauf des Fahrscheins als auch bei deren Kontrolle - eine funktionierende Netzwerkverbindung erfordert. Ohne das Vorhandensein einer funktionierenden Netzwerkverbindung ist es damit auch nicht möglich, einen Fahrschein zu kaufen. Dieser Fall kann in ländlichen Gebieten oder im Falle besonderer baulicher Gegebenheiten, wie z.B. in den Tunneln von Untergrundbahnen, auftreten. Darüber hinaus werden besondere Anforderungen an die Verfügbarkeit und die Datensicherheit des Servers gestellt, was ebenfalls zusätzliche Kosten verursacht.

Aus der WO 2004/081851 A1 ist ein Verfahren zur Handhabung von elektronischen Eintrittsdaten bekannt, bei dem eine elektronische Eintrittskarte unter Verwendung eines Ausgabeterminals über ein öffentliches Datennetz bezogen und auf einem tragbaren Datenträger gespeichert wird. Zur Kontrolle wird der tragbare Datenträger an einem Prüfterminal präsentiert, um Zutritt zu einer durch die Eintrittskarte bezeichneten Veranstaltung zu erhalten. Der Datenträger weist zwei oder mehr physikalisch verschiedene Schnittstellen auf, wobei der Bezug der elektronischen Eintrittskarte unter Verwendung eines auf das genutzte Datennetz abgestimmten Protokolls über eine erste Schnittstelle erfolgt. Die nachfolgende Kontrollpräsentation zur Eintrittserlangung erfolgt über eine zweite Schnittstelle unter Verwendung eines zweiten, auf das bei der Kontrollpräsentation genutzte Prüfterminal abgestimmten Protokolls. Die Verwendung zweier unterschiedlicher Protokolle und zweier physikalisch verschiedener Schnittstellen ermöglicht es, beim Bezug der elektronischen Eintrittskarte und der Kontrolle mit Standardkomponenten zu arbeiten. Durch die Verwendung standardisierter Komponenten wird die Handhabung von elektronischen Tickets erleichtert, insbesondere kostengünstiger. Allerdings ist bei dem in dieser Schrift vorgeschlagenen Verfahren das Vorhandensein einer elektronischen Datenverbindung zwingend, um mindestens das Ticket erstehen zu können.

Mit dem System "Touch & Travel" der Deutschen Bahn ist der Kauf eines Fahrscheins für eine Fahrt mit der Bahn oder einem öffentlichen Verkehrsmittel unter Verwendung eines Mobilfunktelefons möglich. Das System basiert auf dem Prinzip des Ein- und Ausloggens an sog. "Touchpoints" mit Hilfe eines Mobiltelefons. Dabei ist immer eine Verbindung zum Mobilfunknetz erforderlich. Das System erfordert ferner ein hochverfügbares und gegen Angriffe geschütztes Rechnernetzwerk, zu dessen Bereitstellung hohes technisches Know-how notwendig ist. Hohe Anschaffungs- und laufende Kosten sind mit der Bereitstellung des Rechnernetzwerks verbunden. Ferner ist eine große Anzahl an Touchpoints erforderlich, damit sich ein Fahrgast zu Beginn einer Fahrt an jeder Haltestelle "einloggen" und am Ende einer Fahrt am Ausstiegsbahnhof wieder "ausloggen" kann. An kleinen Haltestellen mit wenigen Touchpoints können Störungen der Touchpoints zu einer Behinderung des Systems führen. Darüber hinaus kann es beim Beenden einer Fahrt zu Schwierigkeiten beim "Ausloggen" an einem Touchpoint kommen, wenn zu Stoßzeiten eines Tages viele Fahrgäste versuchen, sich mehr oder minder gleichzeitig auszuloggen.

In dem ähnlichen System aus WO 2008/009654 A2 erzeugt eine Applikation auf dem Endgerät ein Ticket durch lokalen Austausch von Daten mit einem NFC-Tag des Ticketsystems und verwendet dabei optional einen Zeitstempel von der SIM-Karte des Endgerätes, ohne dass dabei eine Verbindung zu einem Ticketserver nötig ist. Dieses Dokument wird als nächstliegender Stand der Technik angenommen.

Vorab mit einem Wert, Guthaben oder einer Berechtigung zu ladende Datenträger sind bekannt aus EP 0463 557, EP 0 752 688 A2 und WO 02/101663 A2.

Gemäß GB 2460240 A wird ein Ticket als Barcode auf dem Mobilfunkgerät angezeigt, wobei der Barcode um eine laufende Zeitanzeige erweitert ist, welche die Zeit anzeigt, seit das Ticket gekauft wurde.

Bei der Prüfung eines Tickets signiert in WO 03/081549 A2 eine Sicherheitseinheit eines Gerätes eine im Rahmen der Prüfung empfangene Zufallszahl zusammen mit dem zu prüfenden Ticket.

US 2004/0030658 offenbart ein Verfahren zur Handhabung eines elektronischen Tickets mithilfe eines mobilen Endgerätes. Das Ticket wird durch ein Ausgabesystem erstellt und an das mobile Endgerät übertragen. Auf dessen Display wird es in geeigneter Weise dargestellt.

Es ist daher Aufgabe der vorliegenden Erfindung, ein auf tragbaren Datenträgern basierendes elektronisches Ticketsystem zu schaffen, das hinsichtlich der bereitzustellenden Nutzungsumgebung möglichst geringe Anforderungen an dessen Betrieb stellt.

Diese Aufgabe wird gelöst durch ein Verfahren mit den Merkmalen des Patentanspruches 1. Vorteilhafte Ausgestaltungen ergeben sich aus den abhängigen Patentansprüchen.

Die Erfindung schafft ein Verfahren zur Handhabung von elektronischen Tickets, insbesondere von elektronischen Fahrscheinen, wobei das elektronische Ticket auf einem tragbaren Datenträger eines mobilen Benutzergeräts gespeichert wird. Erfindungsgemäß wird das elektronische Ticket offline durch den Datenträger des mobilen Benutzergeräts erzeugt.

Wenn in der vorliegenden Beschreibung von "offline" die Rede ist, so bedeutet dies, dass für die Erzeugung des elektronischen Tickets keine Datenverbindung zu einem Ticketsystem bzw. dessen Instanzen (Terminal, Server, ...) existiert und/oder kein Datenaustausch mit dem Ticketsystem bzw. dessen Instanzen stattfindet. Erst nach dem Erzeugen des Tickets ist eine lokale Datenverbindung mit dem Kontrollgerät für die Kontrolle des erzeugten Tickets nötig. Das elektronische Ticket wird "offline" im Sinne von, unabhängig von Instanzen des Ticketsystems, erzeugt.

Das Erzeugen des elektronischen Tickets offline durch den Datenträger des mobilen Benutzergeräts ist als Kaufen eines entsprechenden Tickets zu verstehen. Das Ticket wird ausschließlich basierend auf einer Ticketanforderung durch den Benutzer erzeugt. Die Ticketanforderung definiert der Benutzer durch Eingaben auf einer Benutzerschnittstelle des Benutzergeräts.

Der tragbare Datenträger des mobilen Nutzergeräts ist vorzugsweise eine Chipkarte. Er kann beispielsweise die einem Benutzer zugeordnete SIM (Subscriber Identity Module)-Karte eines Mobilfunkgeräts, eine separate in das Mobilfunkgerät eingesetzte Chipkarte (des Ticketsystembetreibers) oder eine intelligente Massenspeicherkarte sein. Der tragbare Datenträger ist reversibel in das Benutzergerät eingesetzt, welches vorzugsweise ein Mobilfunkgerät ist.

Ein Vorteil des erfindungsgemäßen Verfahrens besteht darin, dass die Bereitstellung von Automaten für den Erwerb von elektronischen Tickets nicht mehr notwendig ist. Für den Benutzer ergibt sich der Vorteil, dass er ein Ticket an jedem beliebigen Ort - ohne auf eine existierende Kommunikationsverbindung angewiesen zu sein - erwerben kann. Für den Betreiber eines Systems zur Bereitstellung der elektronischen Tickets fallen keine Kosten für das Aufstellen und die Wartung von Ticketautomaten sowie keine Kosten zum Einsammeln von in den Ticketautomaten eingeworfenen Bargelds an. Ein weiterer Vorteil des erfindungsgemäßen Verfahrens bei der Handhabung von elektronischen Fahrscheinen besteht darin, dass ein Verkauf in öffentlichen Verkehrsmitteln überflüssig wird. Die Offline-Erzeugung eines elektronischen Tickets lässt darüber hinaus die Erstellung von Bewegungsprofilen der Kunden nicht mehr zu, wodurch ein verbesserter Datenschutz gegeben ist.

Zweckmäßigerweise wird das elektronische Ticket durch eine auf dem tragbaren Datenträger gespeicherte Ticket-Applikation mit einer PKI (Public Key Infrastructure)-Infrastruktur erzeugt. Die Ticket-Applikation stellt die autorisierte Instanz zur Generierung gültiger Tickets dar.

In einer weiteren Ausgestaltung des erfindungsgemäßen Verfahrens wird bei der Registrierung eines Benutzers mit der Ticket-Applikation ein dem tragbaren Datenträger zugewiesener Kennzeichner in dem mobilen Datenträger gespeichert. Weiter werden - ebenfalls im Rahmen der Registrierung - der öffentliche Schlüssel eines durch den tragbaren Datenträger erzeugten Schlüsselpaars sowie der mit dem öffentlichen Schlüssel verschlüsselte Kennzeichner einem mobilen Kontrollgerät zur Kontrolle zu überprüfender Tickets zur Verfügung gestellt. Die Kombination aus Kennzeichner und öffentlichem Schlüssel kann beispielsweise in einer zentralen Datenbank des Betreibers des Ticketing-Systems gespeichert sein. Auf diese Datenbank können Kontrolleure im Falle der Kontrolle eines elektronischen Tickets zugreifen. Soll ein derartiger Online-Zugriff auf die zentrale Datenbank vermieden werden, so kann der Inhalt der Datenbank, welche eine Vielzahl an Datensätzen aus einem Kennzeichner und einem öffentlichen Schlüssel eines einem Benutzer zugeordneten Datenträgers umfasst, an entsprechende Kontrollgeräte der Kontrolleure verteilt werden. Der öffentliche Schlüssel und der Kennzeichner erlauben die eindeutige Verifizierung der Gültigkeit des Tickets.

Zur Kontrolle eines elektronischen Tickets werden neben dem elektronischen Ticket als Kontrollinformationen der Kennzeichner und eine Signatur über das elektronische Ticket und über ein vom Kontrolleur vorgegebenes Geheimnis bereitgestellt, wobei die Signatur mit einem privaten Schlüssel des durch den tragbaren Datenträger erzeugten Schlüsselpaars erzeugt wird. Das Geheimnis ist eine sog. "Challenge", z.B. eine mehrstellige Zahl. Durch die Bildung der Signatur über das elektronische Ticket und über das vorgegebene Geheimnis kann mit hoher Wahrscheinlichkeit sichergestellt werden, ob das durch den tragbaren Datenträger erzeugte Ticket echt ist oder die Kopie eines signierten Tickets mit einer zu Manipulationszwecken angenommenen Challenge ist.

Je nach der Anzahl der möglichen, unterschiedlichen Geheimnisse (beispielsweise eine Zahl zwischen 0 und 99) ist ein Angriff bezüglich des Geheimnisses möglich. Um einen derartigen Angriff zu verhindern ist weiterhin vorgesehen, dass die Anzahl der erzeugbaren Signaturen auf einen vorgegebenen Wert beschränkt ist, insbesondere auf ein Zehntel der Anzahl möglicher, unterschiedlicher Geheimnisse. Diese Variante beruht auf der Überlegung, dass Kontrollen von Tickets in vielen Anwendungsbereichen, insbesondere im öffentlichen Personenverkehr, nur sporadisch auftreten.

Gemäß einer weiteren zweckmäßigen Ausgestaltung werden zur Kontrolle des elektronischen Tickets das elektronische Ticket und die Kontrollinformationen auf einem Display des mobilen Benutzergerätes als optoelektronisch lesbare Schrift, z.B. in Form eines Barcodes, dargestellt, wobei die optoelektronisch lesbare Schrift durch ein mobiles Kontrollgerät zur Überprüfung ausgewertet wird.

Vorzugsweise erfolgt eine Kontrolle des elektronischen Tickets unter Nutzung eines mobilen Kontrollgeräts. Auch der Schritt der Kontrolle zwischen Datenträger im Benutzergerät und dem Kontrollgerät kann ohne Datenverbindung oder Datenaustausch mit den weiteren Instanzen des Ticketsystems (Server, Netzwerk oder weitere Kontrollgeräte) erfolgen.

Zweckmäßigerweise wird ein Ticket, dessen Signatur mit dem öffentlichen Schlüssel des tragbaren Datenträgers positiv überprüft werden kann, als gültiges Ticket angesehen.

Um den Schutz vor Manipulation weiter zu erhöhen, ist vorgesehen, dass die Uhrzeit der Erzeugung des Tickets und/oder ein Gültigkeitsbeginn und/oder -ende des Tickets und/oder eine Ortsangabe, insbesondere eine Abfahrtshaltestelle, bei der Erzeugung eines Tickets für dieses Ticket als Ticketinformationen in dem tragbaren Datenträger gespeichert werden. Zumindest eine der Ticketinformationen ist ein Bestandteil des Tickets, welche bei einer Kontrolle ausgewertet wird oder werden. Die Uhrzeit der Erzeugung des Tickets kann beispielsweise vom Benutzergerät übernommen werden, da der tragbare Datenträger üblicherweise über keine eigene Uhr verfügt.

Die Uhrzeit des Benutzergeräts ist allerdings vergleichsweise leicht zu manipulierbar, daher werden folgende weitergehende Verbesserungen vorgeschlagen.

Der tragbare Datenträger kann angepasst sein, eine abgelaufene Zeit zu erfassen, die insbesondere ab einer Ticketanforderung gemessen wird. Die in dem Datenträger erfasste, abgelaufene Zeit kann durch einen Angreifer nicht erhöht, sondern maximal verringert werden, beispielsweise durch Abschalten des tragbaren Datenträgers.

Gemäß der Erfindung wird die Erzeugung des Tickets und/oder die Bereitstellung des erzeugten Tickets um eine vorgegebene Zeitspanne verzögert. Dies hat zur Folge, dass die Gültigkeit des Tickets erst mit Ablauf der vorgegebenen Zeitspanne beginnt. Hierdurch soll verhindert werden, dass bei einer Kontrolle durch den Benutzer des Benutzergeräts kurzfristig ein Ticket erzeugt wird, ohne dass dies im weiteren Kontrollablauf auffällt.

Eine weitere nicht beanspruchte Ausgestaltung sieht das sofortige Erzeugen des Tickets vor. Jedoch versieht der tragbare Datenträger das Ticket zusätzlich mit der Zeitinformation, welche Zeitspanne seit Erzeugung des Tickets bzw. der Anforderung des Tickets vergangen ist. Nach Ablauf einer definierten Höchstzeitspanne wird die vergangene Zeitspanne nicht mehr weiter vom tragbaren Datenträger ermittelt, sondern nur noch das Erreichen der Höchstzeitspanne im Ticket vermerkt oder ggf. das Ticket ohne Zeitinformation ausgegeben. Dieses Vorgehen ermöglicht sowohl das sofortige Durchschreiten einer systematischen Zutrittskontrolle als auch einen Schutz gegen kurzfristig erzeugte Tickets.

Das Ticketsystem umfasst zumindest ein Kontrollgerät. In der Regel wird das Ticketsystem eine Vielzahl mobiler Kontrollgeräte umfassen. Alternativ oder zusätzlich kann das Ticketsystem stationäre Kontrollgeräte umfassen. Stationäre Kontrollgeräte kontrollieren im Ticketsystem den Zugang in einen Bereich (Bahnsteig, ...) und/oder ein Transportmittel (Bus, S-Bahn ...).

Die mit dem elektronischen Ticket bereitgestellte Zeitinformation (abgelaufene Zeit seit Ticketanforderung) kann ein stationäres Kontrollgerät ignorieren. Das erzeugte Ticket ist bei dem stationären Kontrollgerät immer gültig. Das mit der gleichen Zeitinformation bereitgestellte elektronische Ticket, kann dagegen von einem mobilen Kontrollgerät als ungültig bewertet werden.

Die Erfindung wird nachfolgend näher anhand der Figuren erläutert. Es zeigen:
- Fig. 1: einen beispielhaften Ablauf der Registrierung eines neuen Benutzers in einem System, das die Offline-Erzeugung von Tickets ermöglicht,
- Fig. 2: eine schematische Darstellung des Ablaufs des Offline-Kaufs eines Tickets, und
- Fig. 3: eine schematische Darstellung einer Kontrolle eines Tickets.

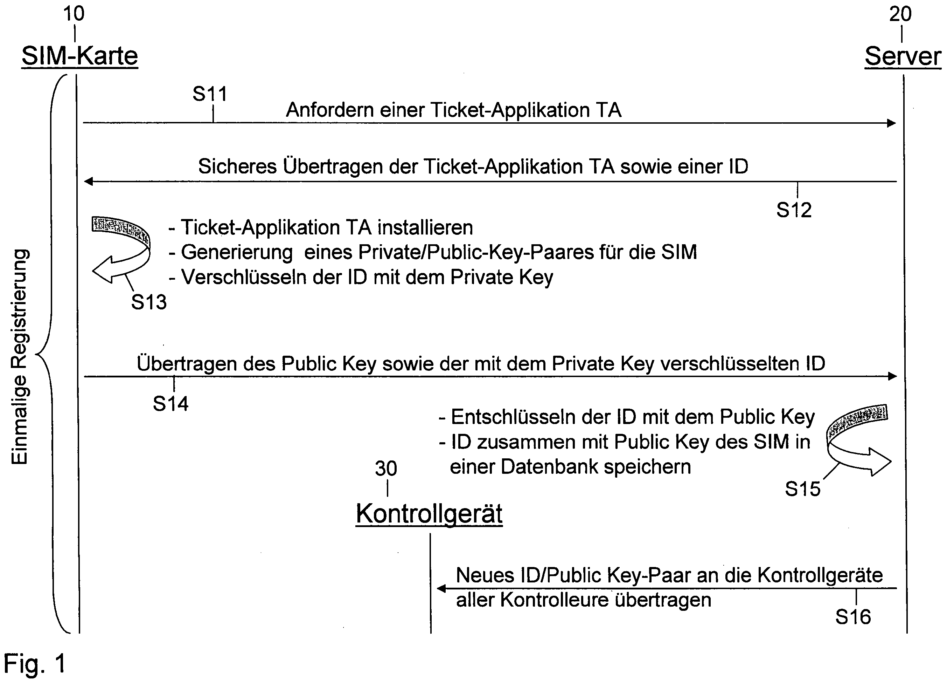

In dem nachfolgend beschriebenen Ausführungsbeispiel wird dabei auf einen elektronischen Fahrschein Bezug genommen, obgleich durch das erfindungsgemäße Verfahren auch auf andere Tickets, wie z.B. Eintrittskarten und dergleichen, angewendet werden kann. In den nachfolgenden Figuren 1 bis 3 ist jeweils ein Kommunikations- bzw. Handlungsablauf zwischen den jeweils beteiligten Komponenten bzw. Benutzern der Komponenten dargestellt.

Fig. 1 zeigt eine zur Nutzung des erfindungsgemäßen Verfahrens vorgesehene Registrierung eines neuen Benutzers. Der Benutzer verfügt über ein mobiles Benutzergerät, beispielsweise ein Mobilfunktelefon. Dieses umfasst einen tragbaren Datenträger 10, wie z.B. eine SIM-Karte. Darüber hinaus verfügt das Mobiltelefon in bekannter Weise über ein Display zur Darstellung von Informationen sowie über eine Eingabevorrichtung zur Eingabe von Daten. Die Eingabevorrichtung kann z.B. in Form einer numerischen oder alphanumerischen Tastatur oder eines berührungssensitiven Displays ausgebildet sein. Im Rahmen der Registrierung des neuen Benutzers erfolgt eine Kommunikation zwischen dem tragbaren Datenträger 10, nachfolgend SIM-Karte, und einem Server 20 eines vom Betreiber des Fahrscheinsystems bereitgestellten Kommunikationsnetzwerks. Ferner erfolgt eine Kommunikation zwischen dem Server 20 und einem Kontrollgerät 30, welches von einem Kontrolleur, beispielsweise einem Schaffner eines Zuges, zur Kontrolle eines erzeugten elektronischen Fahrscheins verwendet wird.

Bei der Registrierung fordert die SIM-Karte 10 gemäß Schritt S11 eine Ticket-Applikation TA von dem Server 20 an. Nach Erhalt einer derartige Anforderung überträgt der Server 20 die angeforderte Ticket-Applikation TA sowie einen Kennzeichner ID an die SIM-Karte 10 (Schritt S12). Die Übertragung der Ticket-Applikation TA sowie des Kennzeichners ID erfolgt vorzugsweise auf sicherem Wege, insbesondere verschlüsselt und signiert. Die Übertragung kann beispielsweise mit GSM 03.48 erfolgen. Der an die SIM-Karte 10 übertragene Kennzeichner ID ist innerhalb des gesamten Systems eindeutig und im Weiteren dieser zugeordnet.

Gemäß Schritt S13 wird die Ticket-Applikation TA auf der SIM-Karte 10 installiert. Ferner wird ein Schlüsselpaar, umfassend einen öffentlichen und einen privaten Schlüssel, für die SIM-Karte 10 generiert. Der private Schlüssel (Private Key) wird - nur für die SIM-Karte selbst zugreifbar - auf dieser abgespeichert. Anschließend wird der Kennzeichner ID mit dem privaten Schlüssel (Private Key) verschlüsselt.

Gemäß Schritt S14 werden der öffentliche Schlüssel (Public Key) sowie der mit dem privaten Schlüssel (Private Key) verschlüsselte Kennzeichner ID an den Server 20 übertragen. Der Server 20 entschlüsselt den Kennzeichner ID mit dem von der SIM-Karte 10 erhaltenen öffentlichen Schlüssel (Public Key). Der Kennzeichner ID wird zusammen mit dem öffentlichen Schlüssel der SIM-Karte 10 in einer Datenbank gespeichert (Schritt S15).

Gemäß Schritt S16 wird das neu generierte Paar aus Kennzeichner ID und zugeordnetem öffentlichem Schlüssel (Public Key) der SIM-Karte 10 an die Kontrollgeräte 30 aller Kontrolleure übertragen.

Die in Fig. 1 dargestellte Registrierung jedes neuen Benutzers stellt sicher, dass der öffentliche Schlüssel (Public Key), mit dem der Fahrschein später kontrolliert wird, auch wirklich von der SIM-Karte 10 des Benutzers stammt. Hieraus folgt, dass der zugehörige private Schlüssel (Private Key) nur auf der SIM-Karte 10 vorliegt. Weiterhin folgt daraus, dass eine Signatur über einen Fahrschein wirklich von der SIM-Karte 10 erzeugt wurde und der Fahrschein somit der SIM-Karte 10 tatsächlich vorliegt und somit kein kopiertes Ticket ist. Wenn der Fahrschein der SIM-Karte vorliegt, bedeutet dies, dass für diesen auch bezahlt wurde. Ein Fahrschein, dessen Signatur mit dem öffentlichen Schlüssel (Public Key) des Benutzers nachgeprüft werden kann, ist dann ein gültiger Fahrschein.

Die in Fig. 1 gezeigte Registrierung braucht vom jedem Benutzer nur ein einziges Mal vorgenommen werden. Insbesondere ist keine Angabe von persönlichen Daten notwendig. Somit entfällt - bis auf eine Datensicherung - auch jegliche Absicherung des für die Registrierung verwendeten Servers 20 gegen Angriffe. Von dem Server 20 gestohlene Daten haben keinen Wert, da diese keinem Benutzer zugeordnet werden können. Dies hat zur Folge, dass auch das für die Kontrolle verwendete Kontrollgerät 30 keinen besonderen Sicherheitsstandards genügen muss.

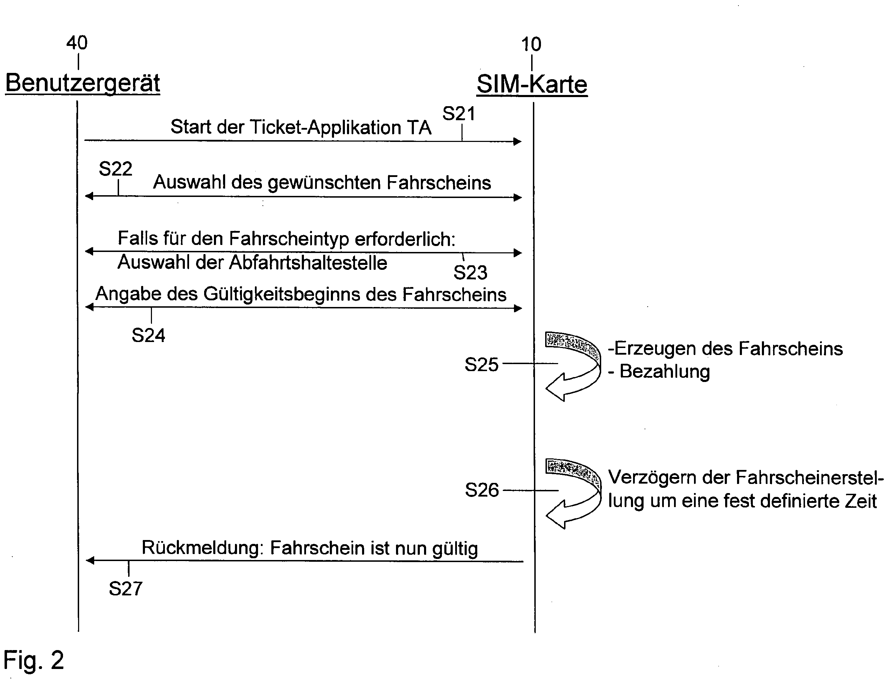

Fig. 2 zeigt den Ablauf beim Kauf eines Fahrscheins zwischen der SIM-Karte 10 und dem durch einen Benutzer bedienten Benutzergerät 40, z.B. einem Mobiltelefon. Zum Kauf eines Fahrscheins erfolgt zunächst der Start der Ticket-Applikation TA (Schritt S21), indem der Benutzer des Benutzergeräts 40 die entsprechende Applikation aktiviert. Über die Ticket-Applikation (z.B. SIM-Toolkit, Smartcard-Webserver, ...) kauft der Benutzer bei der SIM-Karte 10 den gewünschten Fahrschein. Hierzu erfolgt in Schritt S22 eine Auswahl des gewünschten Tickets, d.h. des Fahrscheins. Sofern es für einen bestimmten Fahrscheintyp erforderlich ist, kann oder muss eine Abfahrtshaltestelle gemäß Schritt S23 gewählt werden. Im Falle von verfügbaren Positionsdaten, beispielsweise von einer oder mehreren Mobilfunkzellen, kann aus Gründen des Benutzerkomforts die Auswahl auf Haltestellen im Umkreis des Benutzergeräts 40 beschränkt werden. Schließlich wird durch den Benutzer der Gültigkeitsbeginn des Fahrscheins vorgegeben (Schritt S24).

Durch die SIM-Karte 10 wird gemäß Schritt S25 der Fahrschein erzeugt und ein Geldbetrag von einem gespeicherten, z.B. vorausbezahlten, Betrag abgezogen. Der Fahrschein wird in der SIM-Karte 10 abgelegt. Prinzipbedingt können auch ohne Sicherheitsverlust beliebige Kopien auf dem Benutzergerät 40 abgelegt werden, da dieses den privaten Schlüssel des Benutzers auf der SIM-Karte 10 nicht kennt. Das Mobilfunkgerät 40 kann somit auch alle Daten des Kaufs des Fahrscheins mitprotokollieren, ohne dass ein Betrug oder eine Manipulation möglich würde. Im schlimmsten Fall kann ein Angreifer über einen Trojaner sinnvoll Fahrscheine kaufen, die aber prinzipbedingt an den privaten Schlüssel der SIM-Karte gebunden sind. Ein Angreifer kann mit den gekauften Fahrscheinen nichts anfangen, solange er nicht auf die SIM-Karte 10 zugreifen kann.

Vorzugsweise wird auch die Uhrzeit des Kaufs des Fahrscheins erfasst und zusätzlich in der SIM-Karte 10 abgespeichert. Da die SIM-Karte über keine eigene Uhr verfügt, wird die Uhrzeit des Ticketkaufs von dem Benutzergerät 40 übernommen.

Gemäß Schritt S26 wird erfindungsgemäß die Erstellung des Fahrscheins um eine fest definierte Zeit verzögert. Die Verzögerung kann einige Sekunden oder auch einige Minuten betragen. Hierdurch können schnelle Fahrscheinkäufe nach Beginn einer Kontrolle erkannt werden, so dass eine Manipulation im weiteren Verlauf der Kontrolle auffällt. Gemäß Schritt S27 erfolgt von der SIM-Karte 10 schließlich eine Rückmeldung an das Benutzergerät 40, dass das Ticket nun gültig ist. Diese Rückmeldung kann dem Benutzer über das Display oder einen akustischen Ton ausgegeben werden.

Werden Fahrscheine im Rahmen einer Zutrittskontrolle systematisch geprüft - beispielsweise durch Drehkreuze am Eingang einer Haltestelle - ist in einer nicht beanspruchten Ausgestaltung eine sofortige Erstellung des Fahrscheins vorteilhaft, damit der Benutzer nicht unnötig bei der Zutrittskontrolle warten muss. Die vergangene Zeit seit Erstellung des Fahrscheins wird in diesem Fall von der SIM-Karte 10 mitgezählt und bei einer späteren Kontrolle ebenfalls an das Kontrollgerät 30 übertragen. Indem das Kontrollgerät 30 seinerseits mit dem Beginn einer Kontrolle einen Zeitzähler startet, kann leicht erkannt und protokolliert werden, wenn ein Fahrschein nach Beginn einer Kontrolle erstellt wurde. In diesem Fall ist der Zeitzähler des angezeigten Fahrscheins kleiner als der Zeitzähler des Kontrollgeräts 30. Gleichzeitig ermöglicht das sofortige Erstellen des Fahrscheins das Durchschreiten einer Zutrittskontrolle ohne weitere Verzögerung. Für diese nicht beanspruchte Variante ist es ausreichend, wenn die SIM-Karte 10 die vergangene Zeit bis zu einer Höchstgrenze mitzählt, üblicherweise in der Größenordnung der Dauer einer Fahrscheinkontrolle. Je nach Verkehrsmittel sind dies beispielsweise zwei bis zehn Minuten. Mit dem Erreichen der Höchstgrenze stoppt die SIM-Karte 10 den entsprechenden Zeitzähler. Im Fahrschein wird dann nur noch angegeben, dass der entsprechende Zeitzähler die Höchstgrenze erreicht hat.

Im Falle eines Fahrscheins, der nach seiner Entwertung bis zu drei Stunden zur Weiterfahrt (aber nicht zur Rückfahrt) benutzt werden kann, könnte der Benutzer beim Kauf eine spätere Uhrzeit angeben, beispielsweise 10:00 Uhr statt 9:00 Uhr. Bei einer Kontrolle vor 10:00 Uhr würde dies jedoch auffallen, da auch die Uhrzeit des Ticketkaufs geprüft wird. Vor 10:00 Uhr wird der Fahrschein vom Kontrolleur als nicht gültig angesehen. In gleicher Weise gilt dies für Fahrscheine, die von der Starthaltestelle abhängig sind. Alle Manipulationen bringen somit keinen größeren Nutzen als das konventionelle Fahren ohne Fahrschein.

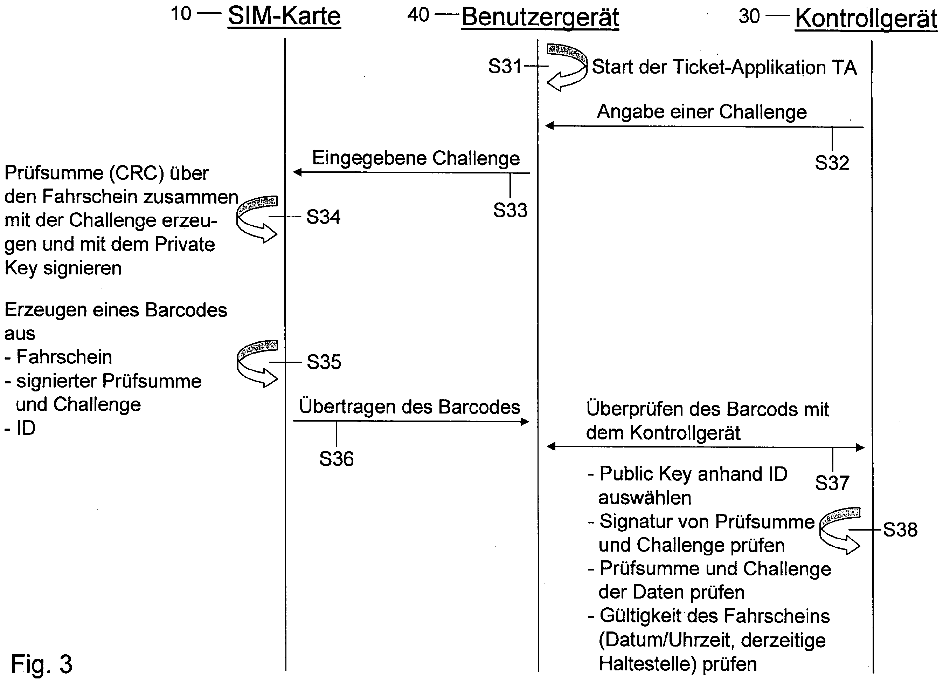

Fig. 3 zeigt den Ablauf bei der Kontrolle eines Tickets. In diese Kontrolle involviert sind die SIM-Karte 10, das Benutzergerät 40 sowie das Kontrollgerät 30 eines Kontrolleurs. Das Kontrollgerät 30 ist dazu ausgebildet, eine Zufallszahl (Challenge) zu erzeugen und dem Kontrolleur anzuzeigen. Darüber hinaus umfasst das Kontrollgerät 30 eine Kamera, um den Bildschirminhalt des Displays des Benutzergeräts 40 erfassen zu können.

Bei einer Kontrolle startet der Benutzer des Benutzergeräts 40 zunächst die Ticket-Applikation TA (Schritt S31). Der Kontrolleur nennt dem Kontrollierten eine Challenge, beispielsweise eine zufällige Zahl zwischen 0 und 99 (Schritt S32). Der Benutzer gibt die Challenge in die Ticket-Applikation des Benutzergeräts 40 ein. Die eingegebene Challenge wird gemäß Schritt S33 von der Ticket-Applikation TA an die SIM-Karte 10 übertragen. Die SIM-Karte 10 erzeugt gemäß Schritt S34 eine Prüfsumme (CRC oder Hash) über den Fahrschein zusammen mit der Challenge. Diese wird mit dem privaten Schlüssel (Private Key) der SIM-Karte 10 signiert. Durch die Challenge wird sichergestellt, dass es sich bei dem signierten Ticket nicht um eine Kopie einer früheren Kontrolle, sondern um einen echten Fahrschein der SIM-Karte 10 handelt.

Die SIM-Karte 10 erzeugt in Schritt S35 einen Barcode aus dem Fahrschein, der signierten Prüfsumme und der Challenge sowie dem Kennzeichner ID. Der Barcode wird gemäß Schritt S36 an das Benutzergerät 40 übertragen und über das Display ausgegeben.

Der Kontrolleur fotografiert mit seinem Kontrollgerät 30 den signierten Fahrschein. Bei einem einfachen Schwarz-Weiß-Display mit 176 x 220 Pixeln können mit Hilfe eines sog. DataMatrix-Barcode und 4 x 4 Pixeln je Bit 211 Bytes dargestellt werden. Ein Fahrschein kann mit 168 Bytes (128 Bytes Ticket und 40 Bytes Response für die Challenge) dargestellt werden. Damit lässt sich der Barcode auf allen verfügbaren Displays darstellen und ist nicht an eine spezielle Benutzer-Hardware gekoppelt.

Das Kontrollgerät 30 interpretiert den Barcode und führt verschiedene Überprüfungen durch (Schritt S37). Durch das Kontrollgerät wird gemäß Schritt S38 anhand des Kennzeichners ID der öffentliche Schlüssel der SIM-Karte 10 ausgewählt. Es erfolgt eine Überprüfung der Signatur der Prüfsumme (Hash) und der Challenge auf Authentizität. Anschließend erfolgt eine Überprüfung der Prüfsumme (Hash) und der Challenge der Daten auf Authentizität. Schließlich erfolgt eine Prüfung der Gültigkeit des Tickets hinsichtlich Datum, Uhrzeit und derzeitiger Haltestelle.

Diese Überprüfung kann durch den Kontrolleur erfolgen oder durch das Kontrollgerät 30 vorgenommen werden, wobei dieses bevorzugt dann über aktuelle Uhrzeit und Haltestelle Informationen hat. Dem Kontrolleur werden dabei der Fahrschein sowie das Ergebnis des Integritätstests angezeigt. Das Ergebnis des Integritätstests umfasst die mit dem privaten Schlüssel erzeugte Signatur des Benutzers, der anhand des Kennzeichners ID im Fahrschein bestimmt werden kann.

Grundsätzlich ist ein Angriff bezüglich der in die Ticket-Applikation TA des Benutzergeräts 40 eingegebenen Challenge möglich. Beispielsweise kann nach Erzeugung eines Tickets von einem Benutzer eine "virtuelle" Prüfung für jedes mögliche Geheimnis aufgerufen und gespeichert werden. Das signierte Ticket kann mit allen Geheimnissen (dies sind bei zwei Ziffern 100 Möglichkeiten) an andere Benutzer weitergegeben oder verkauft werden, was sich beispielsweise bei Tickets mit einem langen Gültigkeitszeitraum lohnt. Bei einer Kontrolle zeigt der betrügende Käufer dann das signierte Ticket mit dem vom Kontrolleur gewünschten Geheimnis vor.

Eine Gegenmaßnahme ist, die Anzahl der zulässigen Abfragen des signierten Fahrscheins zu beschränken. In der Praxis treten Kontrollen in öffentlichen Verkehrsmitteln selten auf, so dass beispielsweise bei 100 möglichen Challenges für eine Wochenkarte fünf und für eine Monatskarte zehn Abfragen von signierten Fahrscheinen problemlos ausreichen. Diese Anzahl kann beliebig erhöht werden, allerdings sollte ein sinnvolles Verhältnis zwischen der Anzahl möglicher Challenges und der Anzahl der Abfragen gewahrt bleiben. Ein Verhältnis von 1:10 wird als sinnvoll erachtet. Es können somit bei einer versuchten Manipulation nur 10 % der möglichen Challenges abgedeckt werden, so dass ein Benutzer des Verkehrsmittels ohne gültigen Fahrschein immer noch zu 90 % Wahrscheinlichkeit aufgefunden werden kann. Bei entsprechend längeren Challenges kann das Verhältnis auch auf höhere Werte erhöht werden.

Die Erfindung weist eine Reihe an Vorteilen auf.

Im Vergleich zum Stand der Technik werden Automaten oder Terminals zur Ausgabe von Tickets bzw. Fahrscheinen überflüssig. Warteschlangen vor diesen können vermieden werden. Kosten für Wartung, Geldeinsammeln und Aufstellen entfallen. Für den Benutzer ergibt sich der Vorteil, dass keine Suche nach Automaten mehr notwendig ist.

Der Verkauf von Fahrscheinen in öffentlichen Verkehrsmitteln wird überflüssig. Hierdurch wird der Fahrer von seiner eigentlichen Tätigkeit nicht abgelenkt und abgehalten. Fahrten können nicht aufgehalten werden.

Vom Verkäufer der Tickets bzw. der Fahrscheine können keine Bewegungsprofile der Kunden erstellt werden. Hierdurch ist ein verbesserter Datenschutz gegeben.

Anforderungen an eine Datenbank im Hintergrundsystem, wie z.B. Netzanbindung, Speicherplatz und Sicherheit, sind gering. Dies gilt insbesondere deshalb, da nicht jede Fahrt, sondern nur die einmal nötige Benutzerregistrierung Aufwand erzeugt. Hierdurch ist das Hintergrundsystem kostengünstig und schnell aufzubauen.

Die Anforderungen an die Datensicherheit der Kontrollgeräte sind gering. Es können nur öffentliche Daten gestohlen werden. Hierdurch ist ein hoher Datenschutz gegeben. Darüber hinaus kann kostengünstige Technik, wie z.B. SD-Karten, zur Speicherung verwendet werden. Der Kauf eines Tickets bzw. eines Fahrscheins ist immer und überall möglich, da keine Netzwerkverbindung erforderlich ist. Hierdurch ist ein hoher Benutzerkomfort gegeben. Die Applikation zum Kauf eines Fahrscheins kann im Gegensatz zu serverbasierten Lösungen und Ticketautomaten leicht an die eigenen Bedürfnisse angepasst werden. Hierdurch ergibt sich ein hoher Benutzerkomfort.

Es sind keine Benutzergeräte mit NFC-Schnittstelle notwendig. Hierdurch ergibt sich ein größerer möglicher Nutzerkreis, da geringere Hardware-Anforderungen bestehen.

Bis auf Kontrollgeräte ist keine zusätzliche Hardware erforderlich. Kontrollgeräte für die Verwendung im erfindungsgemäßen Verfahren sind bereits bekannt und beispielsweise bei der Deutschen Bahn im Einsatz. Alternativ können Smartphones mit einer Kamera verwendet werden, die eine entsprechende Software zur Erkennung von Barcodes enthalten. Möglich ist dies deshalb, da das Verfahren keine besonderen Anforderungen an die Sicherheit des Kontrollgerätes stellt. Hierdurch ist das Verfahren kostengünstig und schnell realisierbar.

Wird die Applikation mit SIM-Toolkit oder Smartcard-Webserver realisiert, können diese für derzeit verfügbare Benutzergeräte, wie z.B. Mobiltelefone, verwendet werden. Es ist keine an bestimmte Typen angepasste Software erforderlich. Auch dies begünstigt eine kostengünstige und schnelle Realisierung.

## Patentansprüche

1. Verfahren zur Handhabung von elektronischen Tickets, insbesondere von elektronischen Fahrscheinen, für ein Ticketsystem mit Kontrollgeräten zur Kontrolle elektronischer Tickets, wobei ein elektronisches Ticket (T) in einem mobilen Benutzergerät (40) gespeichert wird, und das gespeicherte elektronische Ticket (T) für eine Kontrolle durch ein Kontrollgerät (30) bereitgestellt wird,
wobei
das elektronische Ticket (T) durch einen tragbaren Datenträger (10) des mobilen Benutzergeräts (40) nach einer Ticketanforderung durch einen Benutzer erzeugt wird (S25, S26), wobei der Benutzer die Ticketanforderung durch eine Eingabe auf dem mobilen Benutzergerät definiert,
der tragbare Datenträger (10) das elektronische Ticket (T) offline, also unabhängig von anderen Instanzen des Ticketsystems, erzeugt und das erzeugte elektronische Ticket (T) auf dem tragbaren Datenträger (10) des mobilen Benutzergeräts (40) gespeichert wird,
**dadurch gekennzeichnet, dass** der tragbare Datenträger (10) die Erzeugung des Tickets (T) und/oder die Bereitstellung des erzeugten Tickets (T) ab der Ticketanforderung um eine vorgegebene Zeitspanne verzögert (S26).

2. Verfahren nach Anspruch 1, **dadurch gekennzeichnet, dass** das elektronische Ticket (T) durch eine auf dem tragbaren Datenträger (10) gespeicherte Ticket-Applikation (TA) mit einer Public-Key-Infrastruktur erzeugt wird.

3. Verfahren nach Anspruch 1 oder 2, **dadurch gekennzeichnet, dass** ein Ticket (T), dessen Signatur mit dem öffentlichen Schlüssel des tragbaren Datenträgers (10) positiv überprüft werden kann, als gültiges Ticket (T) angesehen wird.

4. Verfahren nach einem der vorhergehenden Ansprüche, **dadurch gekennzeichnet, dass** mit der Ticket-Applikation (TA) ein dem tragbaren Datenträger zugewiesener Kennzeichner (ID) in dem tragbaren Datenträger (10) gespeichert wird.

5. Verfahren nach Anspruch 4, **dadurch gekennzeichnet, dass** der öffentliche Schlüssel eines durch den tragbaren Datenträger (10) erzeugten Schlüsselpaars sowie der mit dem öffentlichen Schlüssel verschlüsselte Kennzeichner (ID) einem mobilen Kontrollgerät (30) zur Kontrolle zu überprüfender Tickets zur Verfügung gestellt werden.

6. Verfahren nach Anspruch 5, **dadurch gekennzeichnet, dass** zur Kontrolle eines elektronischen Tickets (T) neben dem elektronischen Ticket als Kontrollinformationen der Kennzeichner (ID) und eine Signatur über das elektronische Ticket (T) und über ein vom Kontrolleur vorgegebenes Geheimnis bereit gestellt werden, wobei die Signatur mit einem privaten Schlüssel des durch den tragbaren Datenträger (10) erzeugten Schlüsselpaars erzeugt wird.

7. Verfahren nach Anspruch 6, **dadurch gekennzeichnet, dass** die Anzahl der erzeugbaren Signaturen auf einen vorgegebenen Wert beschränkt ist, insbesondere auf ein Zehntel der Anzahl möglicher, unterschiedlicher Geheimnisse.

8. Verfahren nach Anspruch 6 oder 7, **dadurch gekennzeichnet, dass** zur Kontrolle des elektronischen Tickets (T) dieses und die Kontrollinformationen auf einem Display des mobilen Benutzergeräts (40) als optoelektronisch lesbare Schrift dargestellt werden, welche durch ein mobiles Kontrollgerät (30) zur Überprüfung ausgewertet wird.

9. Verfahren nach einem der vorhergehenden Ansprüche, **dadurch gekennzeichnet, dass** die Uhrzeit der Erzeugung des Tickets und/oder ein Gültigkeitsbeginn und/oder -ende des Tickets und/oder eine Ortsangabe, insbesondere eine Abfahrtshaltestelle, bei der Erzeugung eines Tickets (T) für dieses Ticket (T) als Ticketinformationen in dem tragbaren Datenträger (10) gespeichert werden.

10. Verfahren nach Anspruch 9, **dadurch gekennzeichnet, dass** zumindest eine der Ticketinformationen ein Bestandteil des Tickets (T) ist und die zumindest eine der Ticketinformationen bei einer Kontrolle ausgewertet wird.

11. Tragbarer Datenträger angepasst zur Durchführung eines Verfahrens nach einem der Ansprüche 1 bis 10.

12. Mobiles Benutzergerät (40) mit einem tragbaren Datenträger (15) nach Anspruch 11 in der Form einer Chipkarte.

13. Ticketsystem umfassend ein mobiles Benutzergerät (40) nach Anspruch 12 und zumindest ein mobiles Kontrollgerät (30).

## Claims

1. A method for handling electronic tickets, in particular electronic transport tickets, for a ticket system having control devices for controlling electronic tickets, wherein an electronic ticket (T) is stored in a mobile user device (40), and the stored electronic ticket (T) is supplied for a control by a control device (30),
**wherein**
the electronic ticket (T) is generated (S25, S26) by a portable data carrier (10) of the mobile user device (40) after a ticket request by a user, wherein the user defines the ticket request by an input on the mobile user device,
the portable data carrier (10) generates the electronic ticket (T) offline, thus independent of other entities of the ticket system, and
the generated electronic ticket (T) is stored on the portable data carrier (10) of the mobile user device (40),
**characterized in that** the portable data carrier (10) delays the generation of the ticket (T) and/or the supplying of the generated ticket (T) as of the ticket request by a pre-specified time span (S26).

2. The method according to claim 1, **characterized in that** the electronic ticket (T) is generated by a ticket application (TA) stored on the portable data carrier (10) having a public key infrastructure.

3. The method according to claim 1 or 2, **characterized in that** a ticket (T) whose signature can be checked as positive with the public key of the portable data carrier (10) can be regarded as a valid ticket (T).

4. The method according to any of the preceding claims, **characterized in that** an identifier assigned to the portable data carrier (ID) is stored by the ticket application (TA) in the portable data carrier (10).

5. The method according to claim 4, **characterized in that** the public key of the key pair generated by the portable data carrier (10) as well as the identifier (ID) encrypted with the public key is made available to a mobile control device (30) for controlling tickets to be checked.

6. The method according to claim 5, **characterized in that** for controlling an electronic ticket (T) in addition to the electronic ticket as control information items the identifier (ID) and a signature are supplied via the electronic ticket (T) and via a secret pre-specified by the controller, wherein the signature is generated with a private key of the key pair generated by the portable data carrier (10).

7. The method according to claim 6, **characterized in that** the number of the generatable signatures is restricted to a pre-specified value, in particular to a tenth of the number of possible, different secrets.

8. The method according to claim 6 or 7, **characterized in that** for controlling the electronic ticket (T) this and the control information items are rendered on a display of the mobile user device (40) as an optoelectronically readable script which is evaluated by a mobile control device (30) for checking.

9. The method according to any of the preceding claims, **characterized in that** the time of the generation of the ticket and/or a validity start and/or validity end of the ticket and/or a location information, in particular a departure station, are stored for this ticket (T) as ticket information items in the portable data carrier (10) upon the generation of a ticket (T).

10. The method according to claim 9, **characterized in that** at least one of the ticket information items is a constituent of the ticket (T) and the at least one of the ticket information items is evaluated upon a controlling.

11. A portable data carrier adapted for carrying out a method according to any of claims 1 to 10.

12. A mobile user device (40) having a portable data carrier (15) according to claim 11 in the form of a chip card.

13. A ticket system comprising a mobile user device (40) according to claim 12 and at least one mobile control device (30).

## Revendications

1. Procédé de manipulation de tickets électroniques, en particulier de titres de transport électroniques, pour un système de tickets doté d'appareils de contrôle pour le contrôle de tickets électroniques, cependant qu'un ticket électronique (T) est mis en mémoire dans un dispositif mobile d'utilisateur (40) et que le ticket électronique (T) mis en mémoire est mis à disposition pour un contrôle par un appareil de contrôle (30),
**cependant que**
le ticket électronique (T) est généré (S25, S26) par un support de données portable (10) du dispositif mobile d'utilisateur (40) après une demande de ticket de la part d'un utilisateur, cependant que l'utilisateur définit la demande de ticket par une entrée sur le dispositif mobile d'utilisateur,
le support de données portable (10) génère le ticket électronique (T) hors ligne, donc indépendamment d'autres instances du système de tickets, et que le ticket électronique (T) généré est mis en mémoire sur le support de données portable (10) du dispositif mobile d'utilisateur (40), **caractérisé en ce que** le support de données portable (10) retarde d'un laps de temps prédéterminé, à partir de la demande de ticket, la génération du ticket (T) et/ou la mise à disposition du ticket (T) généré.

2. Procédé selon la revendication 1, **caractérisé en ce que** le ticket électronique (T) est généré avec une infrastructure de clé publique par une application ticket (TA) mémorisée sur le support de données portable (10).

3. Procédé selon la revendication 1 ou 2, **caractérisé en ce qu'**un ticket (T) dont la signature peut être vérifiée positivement avec la clé publique du support de données portable (10) est considéré comme ticket (T) valide.

4. Procédé selon une des revendications précédentes, **caractérisé en ce que**, avec l'application ticket (TA), un identificateur (ID) affecté au support de données portable est mis en mémoire dans le support de données portable (10).

5. Procédé selon la revendication 4, **caractérisé en ce que** la clé publique d'une paire de clés générée par le support de données portable (10) ainsi que l'identificateur (ID) crypté avec la clé publique sont mis à la disposition d'un appareil mobile de contrôle (30) pour le contrôle de tickets à vérifier.

6. Procédé selon la revendication 5, **caractérisé en ce que**, pour le contrôle d'un ticket électronique (T), en plus du ticket électronique (T), en tant qu'informations de contrôle, l'identificateur (ID) et une signature sur le ticket électronique (T) et sur un secret prédéterminé par le contrôleur sont mis à disposition, cependant que la signature est générée avec une clé privée de la paire de clés générée par le support de données portable (10).

7. Procédé selon la revendication 6, **caractérisé en ce que** le nombre des signatures pouvant être générées est limité à une valeur prédéterminée, en particulier à un dixième du nombre de secrets différents possibles.

8. Procédé selon une des revendications de 6 ou 7, **caractérisé en ce que**, pour le contrôle du ticket électronique (T), ce dernier et les informations de contrôle sont représentés sur un affichage du dispositif mobile d'utilisateur (40) sous forme d'écriture lisible par voie optoélectronique, laquelle est évaluée par un appareil mobile de contrôle (30) pour vérification.

9. Procédé selon une des revendications précédentes, **caractérisé en ce que** l'heure de la génération du ticket (T) et/ou un début de validité et/ou une fin de validité ticket (T) et/ou une indication de lieu, en particulier une station de départ, sont, lors de la génération d'un ticket (T), mis en mémoire pour ce ticket (T), en tant qu'informations concernant le ticket, dans le support de données portable (10).

10. Procédé selon la revendication 9, **caractérisé en ce qu'**au moins une des informations concernant le ticket est un composant du ticket (T), et que la au moins une des informations concernant le ticket est évaluée lors d'un contrôle.

11. Support de données portable (10) adapté à l'exécution d'un procédé selon une des revendications de 1 à 10.

12. Dispositif mobile d'utilisateur (40) ayant un support de données portable (15) selon la revendication 11 sous forme d'une carte à puce.

13. Système de tickets comprenant un dispositif mobile d'utilisateur (40) selon la revendication 12 et au moins un appareil mobile de contrôle (30).
